# EUROPÄISCHE PATENTANMELDUNG

(11) **EP 2 177 352 A1**
(43) Veröffentlichungstag der Anmeldung: **21.04.2010**
(21) Anmeldenummer: 08105522.0
(22) Anmeldetag: 08.10.2008
(51) Int. Cl.: B32B 15/01, C22C 21/08

(54) **Verbundwerkstoff für die Schall- und Wärmeisolation sowie Verfahren zu dessen Herstellung**

(71) Anmelder: Hydro Aluminium Deutschland GmbH, 51149 Köln (DE)
(72) Erfinder: Schröder, Dietmar, 41515 Grevenbroich (DE)
(74) Vertreter: Cohausz & Florack

(57) **Zusammenfassung**

Verbundwerkstoff (2) für die Schall- und Wärmeisolation, insbesondere zur Verwendung im Kraftfahrzeugbau, welcher eine zwischen einer ersten Schicht (6) und einer zweiten Schicht (8) angeordnete, mittlere Schicht (4) aus einem Aluminiumwerkstoff aufweist, wobei die erste (6) bzw. die zweite Schicht (8) und die mittlere Schicht (4) jeweils mittels einer Klebefolie (10, 10') gefügt sind. Der Erfindung liegt die Aufgabe zu Grunde, einen Verbundwerkstoff (2) anzugeben, welcher sich wirtschaftlicher herstellen lässt und flexibler einsetzbar ist. Gelöst wird die Aufgabe dadurch, dass die mittlere Schicht (4) aus einer Aluminiumlegierung gebildet ist, welche die folgende Zusammensetzung in Gew.-% aufweist:

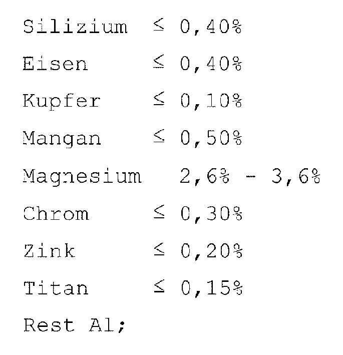

wobei die Summe der Elementanteile von Mangan und Chrom zwischen 0,10% und 0,6% liegt, und mit unvermeidlichen Verunreinigungen, einzeln maximal 0,05%, insgesamt maximal 0,15%.

## Beschreibung

Die Erfindung betrifft einen Verbundwerkstoff für die Schall- und Wärmeisolation, insbesondere zur Verwendung im Kraftfahrzeugbau, welcher eine zwischen einer ersten Schicht und einer zweiten Schicht angeordnete, mittlere Schicht aus einem Aluminiumwerkstoff aufweist, wobei die erste und die zweite Schicht mit der mittleren Schicht jeweils mittels einer Klebefolie gefügt sind. Weiterhin betrifft die Erfindung ein Verfahren zur Herstellung eines Verbundwerkstoffs für die Schall- und Wärmeisolation, insbesondere zur Verwendung im Kraftfahrzeugbau, bei dem zwischen einer ersten Schicht und einer zweiten Schicht eine mittlere Schicht aus einem Aluminiumwerkstoff angeordnet wird, wobei die mittlere Schicht mit der ersten und der zweiten Schicht jeweils mittels einer Klebefolie gefügt wird sowie eine Verwendung des erfindungsgemäßen Verbundwerkstoffs.

In einem Kraftfahrzeug kann es erforderlich sein, eine Wärmeisolierung bestimmter Wärme erzeugender Baugruppen, beispielsweise eines Verbrennungsmotors, von umliegenden Baugruppen vorzusehen. Um weiterhin den beim Betrieb eines Kraftfahrzeugs entstehenden Lärm zu dämpfen, sind Fahrzeugteile erforderlich, welche einerseits die Quellen von Geräuschen, beispielsweise einen Verbrennungsmotor, abschirmen, andererseits aber auch die Ausbreitung von Geräusche verursachenden Vibrationen über die Fahrzeugteile (Körperschall) hemmen, beispielsweise indem die Vibrationen zumindest teilweise von den Fahrzeugteilen absorbiert und in Wärme umgewandelt werden.

Auf Grund der erforderlichen Mehrfachfunktionalität derartiger Fahrzeugteile werden diese häufig aus Verbundwerkstoffen gefertigt. Die Offenlegungsschrift DE 37 21 715 A1 beschreibt einen Verbundwerkstoff, welcher in einer Sandwichstruktur eine mittlere Schicht aus einer Glasfasermatte aufweist, welche wiederum auf einer Seite mit einem Aluminiumdünnband und auf der anderen Seite mit einem Aluminiumband flächig verbunden ist. Um den Einsatz von lösungsmittelhaltigen Klebstoffen, welche insbesondere bei erhöhten Temperaturen eine betriebsbegleitende Lösungsmittelemission mit sich bringen können, zum Verbinden der Aluminiumbänder mit der Glasfasermatte zu vermeiden, wird vorgeschlagen, die Verbindungen zwischen den Schichten mit einem Heißsiegellack auf Polyethylen-Basis vorzunehmen. Diese Vorgehensweise ist jedoch mit einem hohen Prozessaufwand und dadurch mit hohen Kosten verbunden, da der Heißsiegellack auf die Aluminiumbänder aufgetragen, getrocknet und anschließend nach der Zusammenführung der Glasfasermatte mit den lackierten Aluminiumbändern zur Aktivierung einer erhöhten Temperatur ausgesetzt und druckbeaufschlagt werden muss. Darüber hinaus folgen aus der Wahl der Glasfasermattendicke zwischen 3 mm und 10 mm bei dem bekannten Verbundwerkstoff ein erhöhtes Raumerfordernis sowie ein erhöhtes Gewicht, was dessen Handhabbarkeit und Einsetzbarkeit einschränkt.

Die Offenlegungsschrift DE 199 10 516 A1 offenbart einen Sandwichverbund, bei welchem drei Schichten aus Aluminiumblech mit einer doppelseitig wirkenden Klebefolie miteinander gefügt sind. Allerdings sind die Aluminiumbleche so ausgebildet, dass sie einen hohen Elastizitätsmodul aufweisen. Dies erhöht insbesondere den Aufwand zur Herstellung der aus der DE 199 10 516 A1 bekannten Aluminiumbleche.

Der vorliegenden Erfindung liegt die Aufgabe zu Grunde, einen Verbundwerkstoff anzugeben, welcher sich wirtschaftlicher herstellen lässt und flexibler einsetzbar ist. Der Erfindung liegt weiterhin die Aufgabe zu Grunde, ein Verfahren anzugeben, mit welchem sich ein derartiger Verbundwerkstoff wirtschaftlich herstellen lässt.

Gemäß einer ersten Lehre der vorliegenden Erfindung wird die zuvor aufgezeigte Aufgabe mit einem Verbundwerkstoff nach dem Oberbegriff des Patentanspruchs 1 dadurch gelöst, dass die mittlere Schicht aus einer Aluminiumlegierung gebildet ist, welche die folgende Zusammensetzung in Gew.-% aufweist:
silizium ≤ 0,40%
Eisen ≤ 0,40%
Kupfer ≤ 0,10%
Mangan ≤ 0,50%
Magnesium 2,6% - 3,6%
Chrom ≤ 0,30%
Zink ≤ 0,20%
Titan ≤ 0,15%
Rest Al;
wobei die Summe der Elementanteile von Mangan und Chrom zwischen 0,10% und 0,6% liegt, und mit unvermeidlichen Verunreinigungen, einzeln maximal 0,05%, insgesamt maximal 0,15%.

Erfindungsgemäß wurde erkannt, dass ein Verbundwerkstoff, welcher insbesondere zur Schall- und Wärmeisolation verwendet werden soll, durch eine Sandwichstruktur zur Verfügung gestellt werden kann, in welcher eine mittlere Schicht aus einer Aluminiumlegierung mit der zuvor genannten Zusammensetzung mit zwei äußeren Schichten flächig gefügt wird. Die Aluminiumlegierung weist aufgrund des relativ hohen Magnesiumgehalts hohe Festigkeiten auf, ist aber auch deshalb relativ korrosionsanfällig. Durch die schützenden äußeren Schichten des Verbundmaterials wird die innere Aluminiumschicht nicht nur vor Korrosion geschützt, der Verbundwerkstoff weist zudem die notwendigen Festigkeitseigenschaften auf, welche die Einsatzmöglichkeiten als Schall- und Wärmeisolationsmaterial verbessern.

Als Fügemittel kann in besonders wirtschaftlicher und den Herstellungsprozess vereinfachender Weise beidseitig haftende Klebefolie verwendet werden. Die Klebefolie kann dabei als dämpfendes Element in dem Verbundwerkstoff dienen. Die Klebefolie kann weiterhin nicht vollflächig homogen zu den äußeren Schichten ausgebildet sein. Ebenso ist es möglich, dass die Klebefolie mit Ausnehmungen versehen ist, so dass einander benachbarte Schichten nicht vollflächig deckungsgleich miteinander gefügt sind. Dadurch kann durch zusätzliche Hohlräume eine zusätzliche Isolationswirkung erreicht werden. Die Dicke der Klebefolie kann durch geeignete Wahl des Klebefoliensubstrats variiert werden. Durch die Wahl eines elastischen Klebefoliensubstrats beispielsweise kann das Isolationsverhalten ebenfalls beeinflusst werden. Insbesondere kann dadurch das Entdröhnverhalten - also das Absorbieren von Körperschall - des Verbundwerkstoffs verbessert werden. Die Klebefolie zwischen der ersten Schicht und der mittleren Schicht und der zweiten Schicht und der mittleren Schicht kann identisch sein. Es können aber auch Klebefolien mit unterschiedlichen Eigenschaften zum Fügen der ersten bzw. zweiten Schicht mit der mittleren Schicht gewählt werden. Ebenso ist es möglich, die Klebefolie in mehrere Abschnitte aus Klebematerialien oder auch Klebefoliensubstraten mit voneinander abweichenden Eigenschaften aufzuteilen. Auf diese Weise kann auch über die Wahl bzw. Ausgestaltung der Klebefolie eine belastungsgerechte Struktur des Verbundwerkstoffs erzielt werden.

In einer vorteilhaften Ausgestaltung des Verbundwerkstoffs weist die Aluminiumlegierung, aus welcher die mittlere Schicht gebildet ist, die folgende Zusammensetzung in Gew.-% auf:
- Silizium: 0,2% - 0,4%
- Eisen: 0,3% - 0,4%
- Kupfer: ≤ 0,1%
- Mangan: 0,35% - 0,5%
- Magnesium: 3,0% - 3,4%
- Chrom: 0,05% - 0,1%
- Zink: ≤ 0,2%
- Titan Rest Al;: ≤ 0,15%
wobei unvermeidliche Verunreinigungen einzeln maximal 0,05%, insgesamt maximal 0,15% ausmachen. Die Festigkeitswerte dieser Aluminiumlegierung sind unter dem Gesichtspunkt der Beibehaltung guter Verarbeitungseigenschaften der Aluminiumlegierung beispielsweise zu einer Folie und deren Einsatz zur Herstellung des Verbundwerkstoffs optimiert.

Vorzugsweise ist der Aluminiumwerkstoff der mittleren Schicht aus Recyclingaluminiumwerkstoffen gebildet. Die Recyclingaluminiumwerkstoffe verbinden in vorteilhafter Weise Kosteneinsparungen durch die gegenüber Werkstoffen aus Primäraluminium verringerten Herstellungskosten und ein geringes Gewicht, welches durch die allen Aluminiummaterialien im Vergleich zu anderen Metallwerkstoffen, beispielsweise Stahl, inhärente geringe Dichte verursacht wird. Aus diesem Grund kann der erfindungsgemäße Verbundwerkstoff als Schall- und Wärmeisolation in gewichtssensitiven Bereichen wie dem Kraftfahrzeugbau vorteilhaft eingesetzt werden. Denn Recyclingaluminiumwerkstoffe werden häufig aus hohe Magnesiumanteile aufweisenden Schrotten unterschiedlicher Herkunft gewonnen. Im Ergebnis stehen ohne größeren Aufwand Aluminiumlegierungen mit hohen Magnesiumanteilen zur Verfügung, die ideal in dem erfindungsgemäßen Verbundwerkstoff verwendet werden können.

In einer vorteilhaften Ausgestaltung des erfindungsgemäßen Verbundwerkstoffs ist die erste und/oder zweite Schicht aus einem Aluminiumwerkstoff gebildet. Auf diese Weise kann ein besonders kompakter Aufbau des Verbundwerkstoffs umgesetzt werden, der insbesondere ein geringes Raumerfordernis sowie ein geringes Gewicht aufweist. Der Verbundwerkstoff kann somit auch dort eingesetzt werden, wo wenig Montageraum zur Verfügung steht bzw. das Gewicht in der Anwendung des Verbundwerkstoffs eine Rolle spielt. Denkbar ist aber auch die Verwendung von einem Polymer für die äußeren Schichten.

Vorzugsweise weist die Klebefolie eine hohe Wärmebeständigkeit auf. Unter einer hohen Wärmebeständigkeit wird erfindungsgemäß verstanden, dass die Klebeigenschaften der Klebefolie für Temperaturen von mehr als 120 °C ausgelegt sind und ihre Eigenschaften nicht verlieren. Dies ist besonders vorteilhaft, wenn der Verbundwerkstoff in der Umgebung von Wärme generierenden Vorrichtungen, beispielsweise Verbrennungsmotoren von Kraftfahrzeugen, zum Einsatz kommt. Auf diese Weise wird der Zusammenhalt des Verbundwerkstoffs auch bei erhöhten Temperaturen gewährleistet, so dass die Funktionalität des Verbundwerkstoffs in einer entsprechenden Umgebung nicht beeinträchtigt wird.

In einer weiteren vorteilhaften Ausgestaltung des Verbundwerkstoffs sind die Recyclingaluminiumwerkstoffe aus Folienschrott und/oder Blechschrott gebildet. Da an eine mittlere Schicht aus Recyclingaluminiumwerkstoffen keine strengen Anforderungen zu stellen sind, ist es grundsätzlich möglich, Recyclingaluminiumwerkstoffe mit einen breiten Bereich umfassenden Zusammensetzungen, insbesondere hinsichtlich Magnesium, zu verwenden. Dies erleichtert insbesondere die Zusammenstellung und Aufbereitung der Recyclingaluminiumwerkstoffe und bewirkt eine deutliche Kostenreduzierung bei der Herstellung des Verbundwerkstoffs.

Es ist bevorzugt, dass wenigstens einer der Aluminiumwerkstoffe der ersten Schicht und/oder der zweiten Schicht aus Reinaluminium oder einer Aluminiumlegierung gebildet ist. Insbesondere für die erste und/oder die zweite Schicht kann so ein Werkstoff gewählt werden, welcher ein niedriges Gewicht und andere vorteilhafte Eigenschaften wie gute Fügbarkeit - beispielsweise für Schweißverfahren - oder Korrosionsbeständigkeit aufweist. Auf diese Weise kann der Verbundwerkstoff prozesssicher mit anderen Werkstoffen bzw. Bauteilen gefügt und insbesondere belastungsgerecht ausgelegt werden.

In einer weiteren vorteilhaften Ausgestaltung des Verbundwerkstoffs sind die erste Schicht und die zweite Schicht aus dem gleichen Werkstoff, insbesondere Aluminiumwerkstoff, oder aus unterschiedlichen Werkstoffen, insbesondere Aluminiumwerkstoffen, gebildet. Auf diese Weise kann ein hinsichtlich der Materialien symmetrischer Verbundwerkstoff zur Verfügung gestellt werden. Dies kann sich vorteilhaft auswirken, wenn eine Orientierung des Verbundwerkstoffs keine Rolle spielt. Der Verbundwerkstoff wird somit flexibler einsetzbar.

Vorzugsweise weisen die erste Schicht und die zweite Schicht identische oder voneinander abweichende Dicken auf. Dadurch kann der Verbundwerkstoff sehr flexibel auf die im Betrieb zu erwartende Belastungssituation ausgelegt werden. Die äußere Schicht, welche beispielsweise einem Verbrennungsmotor in einem Kraftfahrzeug zugewandt ist, kann beispielsweise mit einer Dicke ausgebildet werden, welche gegenüber der auf der dem Motor abgewandten Seite des Verbundwerkstoffs angeordneten Schicht vergrößert ist, um besser an die während des Betriebs an dem Motor entstehende Hitze angepasst zu sein.

Gemäß einer weiteren Lehre der vorliegenden Erfindung wird die zuvor aufgezeigt Aufgabe auch durch ein Verfahren zur Herstellung eines Verbundwerkstoffs für die Schall- und Wärmeisolation, insbesondere zur Verwendung im Kraftfahrzeugbau, nach dem Oberbegriff des Patentanspruchs 9 dadurch gelöst, dass die mittlere Schicht aus einer Aluminiumlegierung gebildet wird, welche die folgende Zusammensetzung in Gew.-% aufweist:
- Silizium ≤: 0,40%
- Eisen: ≤ 0,40%
- Kupfer: ≤ 0,10%
- Mangan: ≤ 0,50%
- Magnesium: 2,6% - 3,6%
- Chrom: ≤ 0,30%
- Zink: ≤ 0,20%
- Titan Rest Al;: ≤ 0,15%
wobei die Summe der Elementanteile von Mangan und Chrom zwischen 0,10% und 0,6% liegt, und mit unvermeidlichen Verunreinigungen, einzeln maximal 0,05%, insgesamt maximal 0,15%

Einerseits lässt sich so ein Verbundwerkstoff mit relativ hoher Festigkeit bei guten Wärmeisolationseigenschaften herstellen. Andererseits ist der Verbundwerkstoff nicht so korrosionsanfällig, da die Aluminiumschicht zwischen zwei Schichten eingebettet ist.

Bevorzugt ist es, wenn die erste bzw. zweite Schicht und die mittlere Schicht durchlaufend in Bandform mittels der Klebefolie gefügt werden. Dadurch kann ein sehr zeiteffizientes Herstellungsverfahren zur Verfügung gestellt werden. Der Verbundwerkstoff kann nach dem Fügen aufgehaspelt oder in bestimmte vordimensionierte Abschnitte abgelängt und gelagert werden.

In einer vorteilhaften Ausführungsform des Verfahrens weist die Aluminiumlegierung, aus welcher die mittlere Schicht gebildet wird, die folgende Zusammensetzung in Gew.-% auf:
- Silizium: 0,2% - 0,4%
- Eisen: 0,3% - 0,4%
- Kupfer: ≤ 0,1%
- Mangan: 0,35% - 0,5%
- Magnesium: 3,0% - 3,4%
- Chrom: 0,05% - 0,1%
- Zink: ≤ 0,2%
- Titan Rest Al;: ≤ 0,15%
wobei unvermeidliche Verunreinigungen einzeln maximal 0,05%, insgesamt maximal 0,15% ausmachen. Wie zuvor ausgeführt, ist diese Aluminiumlegierung im Hinblick auf eine Verarbeitung der Aluminiumlegierung zu einer Folie und weiter zum Verbundwerkstoff optimiert.

Der Aluminiumwerkstoff der mittleren Schicht kann aus Recyclingaluminiumwerkstoffen gebildet werden. Dadurch wird insbesondere eine hohe Wirtschaftlichkeit bei der Herstellung des Verbundwerkstoffs erreicht.

In einer weiteren vorteilhaften Ausführungsform des Verfahrens wird die erste und/oder zweite Schicht aus einem Aluminiumwerkstoff gebildet. Damit kann insbesondere ein gewichtsoptimierter Verbundwerkstoff zur Verfügung gestellt werden.

Vorzugsweise wird eine Klebefolie mit hoher Wärmebeständigkeit verwendet. Auf diese Weise kann das Temperaturspektrum, innerhalb dem der Verbundwerkstoff zum Einsatz kommen kann, zu höheren Temperaturen, beispielsweise auf oberhalb von 120 °C, erweitert werden.

In einer weiteren vorteilhaften Ausführungsform des Verfahrens werden die Recyclingaluminiumwerkstoffe aus Folienschrott und/oder Blechschrott gebildet. Dies erlaubt es insbesondere, Aluminiumschrotte unterschiedlicher Herkunft, welche dementsprechend unterschiedliche Zusammensetzungen mit vergleichsweise hohen Magnesiumanteilen aufweisen können, in einen funktionellen Werkstoff aufzubereiten und wiederzuverwerten.

Es ist bevorzugt, dass wenigstens einer der Aluminiumwerkstoffe der ersten Schicht und/oder der zweiten Schicht aus Reinaluminium gebildet wird. Damit können insbesondere die Vorteile eines geringen Gewichts und einer geringen Korrosionsanfälligkeit des Verbundwerkstoffs ausgenutzt werden.

In einer weiteren vorteilhaften Ausführungsform des Verfahrens kann die erste Schicht und die zweite Schicht aus dem gleichen Werkstoff, insbesondere Aluminiumwerkstoff, oder aus unterschiedlichen Werkstoffen, insbesondere Aluminiumwerkstoffen, gebildet werden. Auf diese Weise kann ein hinsichtlich der verwendeten Materialien symmetrischer Verbundwerkstoff hergestellt werden.

Weiterhin können die erste Schicht und die zweite Schicht mit identischen oder voneinander abweichenden Dicken gebildet werden. Damit kann der Verbundwerkstoff insbesondere kompatibel zu den während des Betriebs zu erwartenden Belastungen ausgelegt werden.

Hinsichtlich weiterer vorteilhafter Ausführungsformen bzw. Wirkungen des erfindungsgemäßen Verfahrens wird auf die Ausführungen zu dem erfindungsgemäßen Verbundwerkstoff verwiesen.

Gemäß einer weiteren Lehre der vorliegenden Erfindung wird die zuvor aufgezeigte Aufgabe auch durch die Verwendung des erfindungsgemäßen Verbundwerkstoffs im Kraftfahrzeug, Schienenfahrzeug oder Flugzeug gelöst. In allen drei genannten Fortbewegungsmitteln treten spezifisch Wärme- und Schallisolationsprobleme auf, welche mit dem erfindungsgemäßen Verbundwerkstoff auf wirtschaftliche und raumsparende Weise gelöst werden können..

Es gibt nun vielfältige Möglichkeiten, den erfindungsgemäßen Verbundwerkstoff bzw. das erfindungsgemäße Verfahren auszugestalten und weiterzubilden. Hierzu wird einerseits auf die den unabhängigen Patentansprüchen nachgeordneten abhängigen Patentansprüche und andererseits auf die Beschreibung eines Ausführungsbeispiels in Verbindung mit der Zeichnung verwiesen. In der Zeichnung zeigen:
- Fig. 1: ein schematisches Ausführungsbeispiel eines erfindungsgemäßen Verbundwerkstoffs für die Schall-und Wärmeisolation in einer Querschnittsansicht,
- Fig. 2: ein weiteres schematisches Ausführungsbeispiel eines erfindungsgemäßen Verbundwerkstoffs für die Schall- und Wärmeisolation in einer Querschnittsansicht.

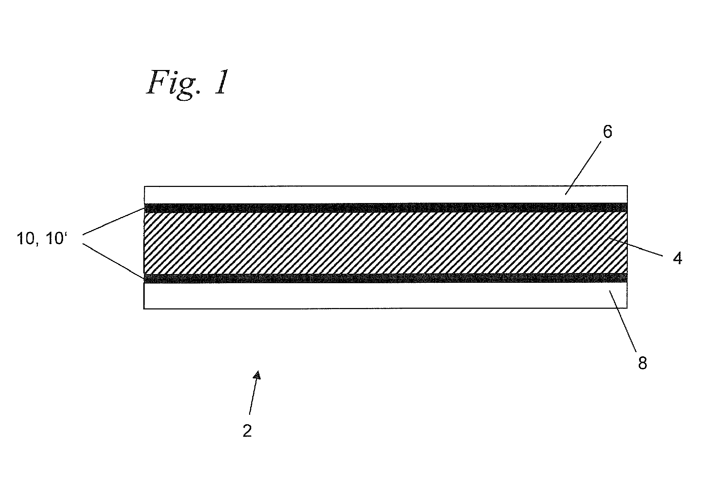

Fig. 1 zeigt einen Verbundwerkstoff 2, welcher aus einer mittleren Schicht 4 und aus zwei äußeren Schichten 6, 8 besteht. Die äußeren Schichten 6, 8 können beispielsweise aus Aluminiumwerkstoffen, insbesondere Reinaluminium oder Aluminiumlegierungen, gebildet sein. Die mittlere Schicht 4 besteht in diesem Beispiel aus einer Aluminiumlegierung, welche die folgende Zusammensetzung in Gew.-% aufweist:
- Silizium ≤: 0,40%
- Eisen: ≤ 0,40%
- Kupfer: ≤ 0,10%
- Mangan: ≤ 0,50%
- Magnesium: 2,6% - 3,6%
- Chrom: ≤ 0,30%
- Zink: ≤ 0,20%
- Titan Rest Al;: ≤ 0,15%
wobei die Summe der Elementanteile von Mangan und Chrom zwischen 0,10% und 0,6% liegt, und mit unvermeidlichen Verunreinigungen, einzeln maximal 0,05%, insgesamt maximal 0,15%.

Die Aluminiumlegierung der mittleren Schicht 4 im dargestellten Ausführungsbeispiel ist aus Recyclingaluminiumwerkstoffen gebildet. Der Verbundwerkstoff kann so besonders wirtschaftlich hergestellt werden.

Überdies sind die erste Schicht 6 und die zweite Schicht 8 in diesem Beispiel aus dem gleichen Werkstoff gebildet. Die mittlere Schicht 4 ist mit den äußeren Schichten 6, 8 mittels Lagen aus doppelseitiger Klebefolie 10, 10' gefügt. Auf diese Weise wird in diesem Beispiel eine belastbare flächige Verbindung zwischen den Schichten 4, 6, 8 geschaffen. Die Klebefolie 10, 10' verleiht dem Verbundwerkstoff (2) darüber hinaus eine entdröhnende Wirkung. Besonders bevorzugt ist es, wenn die Klebefolie 10, 10' eine hohe Wärmebeständigkeit aufweist, beispielsweise eine Temperaturbeständigkeit von größer 150 °C, so dass beispielsweise der Motorraum eines Kraftfahrzeugs als Einsatzort in Frage kommt.

In dem Ausführungsbeispiel aus Fig. 1 weisen die Schichten 4, 6, 8 bestimmte Dickenverhältnisse zueinander auf. So ist die Dicke der mittleren Schicht 4 am größten, wohingegen die Dicke der ersten Schicht 6 am geringsten ist. Dies ist jedoch nur beispielhaft gezeigt. Ebenso ist es möglich, andere Dickenverhältnisse einzustellen. Weiterhin ist Fig. 1 zu entnehmen, dass die Klebefolien 10, 10' gleichartig aufgebaut sind. Auch dies ist lediglich beispielhaft gezeigt. Ebenso ist es möglich, die beiden Lagen der Klebefolie 10, 10' mit unterschiedlichen Eigenschaften, beispielsweise hinsichtlich der Dicke oder der Elastizität des Klebefoliensubstrats, auszugestalten. Ebenso ist es denkbar, die Klebefolie 10, 10' innerhalb einer Lage mit variierenden Eigenschaften, beispielsweise Haftvermögen oder Elastizität, auszugestalten, um eine bestmögliche Anpassung an die zu erwartende Belastung des Verbundwerkstoffs während des Betriebs des aus ihm gegebenenfalls geformten Bauteils zu erzielen.

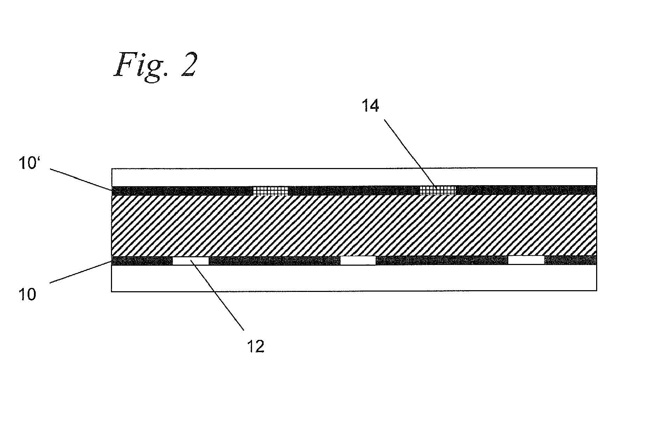

Ein Beispiel für multi-strukturierte Klebefolien 10, 10' ist in Fig. 2 gezeigt. Eine Lage der Klebefolie 10 weist in diesem Beispiel in regelmäßigen Abständen Ausnehmungen 12 auf, an denen zwischen den gefügten Schichten Hohlräume entstehen. Die Ausnehmungen 12 können beispielsweise mit Luft oder einem anderen Gas gefüllt sein und bewirken dadurch einen zusätzlichen Isolationseffekt. Die andere Lage der Klebefolie 10' ist in dem in Fig. 2 gezeigten Beispiel nicht vollflächig homogen aus einem Klebefoliensubstrat ausgebildet, sondern weist Abschnitte 14 mit vom Rest der Klebefolie abweichenden Substrateigenschaften - beispielsweise hinsichtlich der Elastizität - auf. Auf diese Weise kann eine Lage einer Klebefolie 10' sehr flexibel und belastungsgerecht ausgelegt werden.

## Patentansprüche

**1.** Verbundwerkstoff (2) für die Schall- und Wärmeisolation, insbesondere zur Verwendung im Kraftfahrzeugbau, welcher eine zwischen einer ersten Schicht (6) und einer zweiten Schicht (8) angeordnete, mittlere Schicht (4) aus einem Aluminiumwerkstoff aufweist, wobei die erste (6) und die zweite Schicht (8) mit der mittleren Schicht (4) jeweils mittels einer Klebefolie (10, 10') gefügt sind,
**dadurch gekennzeichnet, dass** die mittlere Schicht (4) aus einer Aluminiumlegierung gebildet ist, welche die folgende Zusammensetzung in Gew.-% aufweist:
Silizium ≤ 0,40%
Eisen ≤ 0,40%
Kupfer ≤ 0,10%
Mangan ≤ 0,50%
Magnesium 2,6% - 3,6%
Chrom ≤ 0,30%
Zink ≤ 0,20%
Titan Rest Al; ≤ 0,15%
wobei die Summe der Elementanteile von Mangan und Chrom zwischen 0,10% und 0,6% liegt, und mit unvermeidlichen Verunreinigungen, einzeln maximal 0,05%, insgesamt maximal 0,15%.

**2.** Verbundwerkstoff nach Anspruch 1,
**dadurch gekennzeichnet, dass** die mittlere Schicht (4) aus einer Aluminiumlegierung gebildet ist, welche die folgende Zusammensetzung in Gew.-% aufweist:
Silizium 0,2% - 0,4%
Eisen 0,3% - 0,4%
Kupfer ≤ 0,1%
Mangan 0,35% - 0,5%
Magnesium 3,0% - 3,4%
Chrom 0,05% - 0,1%
Zink ≤ 0,2%
Titan Rest Al; ≤ 0,15%
wobei unvermeidliche Verunreinigungen einzeln maximal 0,05%, insgesamt maximal 0,15% ausmachen.

**3.** Verbundwerkstoff nach Anspruch 1 oder 2,
**dadurch gekennzeichnet, dass** der Aluminiumwerkstoff der mittleren Schicht (4) aus Recyclingaluminiumwerkstoffen gebildet ist.

**4.** Verbundwerkstoff nach einem der Ansprüche 1 bis 3,
**dadurch gekennzeichnet, dass** die erste (6) und/oder zweite Schicht (8) aus einem Aluminiumwerkstoff gebildet ist.

**5.** Verbundwerkstoff nach einem der Ansprüche 1 bis 4,
**dadurch gekennzeichnet, dass** die Klebefolie (10, 10') eine hohe Wärmebeständigkeit aufweist.

**6.** Verbundwerkstoff nach einem der Ansprüche 1 bis 5,
**dadurch gekennzeichnet, dass** die erste Schicht (6) und die zweite Schicht (8) aus dem gleichen Werkstoff, insbesondere Aluminiumwerkstoff, oder aus unterschiedlichen Werkstoffen, insbesondere Aluminiumwerkstoffen, gebildet sind.

**7.** Verbundwerkstoff nach einem der Ansprüche 1 bis 6,
**dadurch gekennzeichnet, dass** die erste Schicht (6) und die zweite Schicht (8) identische oder voneinander abweichende Dicken aufweisen.

**8.** Verfahren zur Herstellung eines Verbundwerkstoffs (2) für die Schall- und Wärmeisolation, insbesondere zur Verwendung im Kraftfahrzeugbau, vorzugsweise nach einem der Ansprüche 1 bis 7, bei dem zwischen einer ersten Schicht (6) und einer zweiten Schicht (8) eine mittlere Schicht (4) aus einem Aluminiumwerkstoff angeordnet wird, wobei die mittlere Schicht (4) mit der ersten (6) und mit der zweiten Schicht (8) jeweils mittels einer Klebefolie (10, 10') gefügt wird,
**dadurch gekennzeichnet, dass** die mittlere Schicht (4) aus einer Aluminiumlegierung gebildet wird, welche die folgende Zusammensetzung in Gew.-% aufweist:
Silizium ≤ 0,40%
Eisen ≤ 0,40%
Kupfer ≤ 0,10%
Mangan ≤ 0,50%
Magnesium 2,6% - 3,6%
Chrom ≤ 0,30%
Zink ≤ 0,20%
Titan Rest Al; ≤ 0,15%
wobei die Summe der Elementanteile von Mangan und Chrom zwischen 0,10% und 0,6% liegt, und mit unvermeidlichen Verunreinigungen, einzeln maximal 0,05%, insgesamt maximal 0,15%, Rest Aluminium.

**9.** Verfahren nach Anspruch 8,
**dadurch gekennzeichnet, dass** die mittlere Schicht (4) aus einer Aluminiumlegierung gebildet wird, welche die folgende Zusammensetzung in Gew.-% aufweist:
Silizium 0,2% - 0,4%
Eisen 0,3% - 0,4%
Kupfer ≤ 0,1%
Mangan 0,35% - 0,5%
Magnesium 3,0% - 3,4%
Chrom 0,05% - 0,1%
Zink ≤ 0,2%
Titan Rest Al; ≤ 0,15%
wobei unvermeidliche Verunreinigungen einzeln maximal 0,05%, insgesamt maximal 0,15% ausmachen.

**10.** Verfahren nach Anspruch 8 oder 9,
**dadurch gekennzeichnet, dass** der Aluminiumwerkstoff der mittleren Schicht (4) aus Recyclingaluminiumwerkstoffen gebildet wird.

**11.** Verfahren nach Anspruch 8 bis 10,
**dadurch gekennzeichnet, dass** die erste (6) und/oder zweite Schicht (8) aus einem Aluminiumwerkstoff gebildet wird.

**12.** Verfahren nach Anspruch 8 bis 11,
**dadurch gekennzeichnet, dass** eine Klebefolie (10, 10') mit hoher Wärmebeständigkeit verwendet wird.

**13.** Verfahren nach einem der Ansprüche 8 bis 12,
**dadurch gekennzeichnet, dass** die erste Schicht (6) und die zweite Schicht (8) aus dem gleichen Werkstoff, insbesondere Aluminiumwerkstoff, oder aus unterschiedlichen Werkstoffen, insbesondere Aluminiumwerkstoffen, gebildet werden.

**14.** Verfahren nach einem der Ansprüche 8 bis 13,
**dadurch gekennzeichnet, dass** die erste Schicht (6) und die zweite Schicht (8) mit identischen oder voneinander abweichenden Dicken gebildet werden.

**15.** Verwendung eines Verbundwerkstoffs gemäß einem der Ansprüche 1 bis 7 im Kraftfahrzeug, Schienenfahrzeug oder Flugzeug.
